# DEMANDE DE BREVET EUROPEEN

(11) **EP 4 570 587 A1**
(43) Date de publication de la demande: **18.06.2025**
(21) Numéro de dépôt: 24218644.3
(22) Date de dépôt: 10.12.2024
(51) Int. Cl.: B60N 2/02, B60N 2/865

(54) **APPUI-TÊTE DE SIÈGE DE VÉHICULE AUTOMOBILE**

(30) Priorité: 12.12.2023 FR 2314041
(71) Demandeur: TESCA France, 92977 Paris La Défense Cedex (FR)
(72) Inventeur: GEORGES, Laurent, 92977 Paris La Défense Cedex (FR); LEFEVRE, Steve, 92977 Paris La Défense Cedex (FR)
(74) Mandataire: Sayettat, Julien Christian

(57) **Abrégé**

L'invention concerne un appui-tête (1) de siège de véhicule automobile, ledit appui-tête comprenant un premier élément (2a) structurel, un deuxième élément (3a) structurel supportant un coussin d'appui qui est monté en coulissement par rapport audit premier élément au moyen d'un dispositif d'actionnement comprenant un motoréducteur (4) fixé à l'un desdits éléments, ledit dispositif comprenant une vis interne (5) sans fin actionnée en rotation par ledit motoréducteur, une vis externe (6) sans fin pourvue d'un filetage externe (7), ladite vis étant tubulaire et présentant un filetage interne (8) s'étendant sur une portion de sa longueur, ladite vis externe recevant ladite vis interne en vissage dans ledit filetage interne, ledit filetage interne étant disposé en extrémité (9) de ladite vis externe la plus proche dudit motoréducteur et un écrou (10) recevant ledit filetage externe, ledit écrou étant fixé à l'autre desdits éléments.

## Description

L'invention concerne un appui-tête de siège de véhicule automobile.

Il est connu de réaliser un appui-tête de siège de véhicule automobile, ledit appui-tête comprenant :
- un premier élément structurel,
- un deuxième élément structurel supportant un coussin d'appui de la tête d'un occupant dudit siège, ledit deuxième élément étant monté en coulissement par rapport audit premier élément, de manière à permettre un réglage de la position dudit coussin,
- un dispositif d'actionnement motorisé dudit deuxième élément en coulissement, ledit dispositif comprenant un motoréducteur fixé à l'un desdits éléments.

Avec un tel agencement, il peut s'avérer difficile de loger dans le volume de l'appui-tête, en particulier quand il présente une certaine compacité, un dispositif d'actionnement permettant une course suffisante du deuxième élément en coulissement.

L'invention a pour but de proposer un agencement permettant de répondre à cette attente.

A cet effet, l'invention propose un appui-tête de siège de véhicule automobile, ledit appui-tête comprenant :
- un premier élément structurel,
- un deuxième élément structurel supportant un coussin d'appui de la tête d'un occupant dudit siège, ledit deuxième élément étant monté en coulissement par rapport audit premier élément, de manière à permettre un réglage de la position dudit coussin,
- un dispositif d'actionnement motorisé dudit deuxième élément en coulissement, ledit dispositif comprenant un motoréducteur fixé à l'un desdits éléments,
ledit dispositif comprenant en outre :
- une vis interne sans fin actionnée en rotation par ledit motoréducteur,
- une vis externe sans fin pourvue d'un filetage externe, ladite vis étant tubulaire et présentant un filetage interne s'étendant sur une portion de sa longueur, ladite vis externe recevant ladite vis interne en vissage dans ledit filetage interne, ledit filetage interne étant disposé en extrémité de ladite vis externe la plus proche dudit motoréducteur,
- un écrou recevant ledit filetage externe, ledit écrou étant fixé à l'autre desdits éléments,
de sorte que lesdits éléments soient reliés entre eux par une double vis afin de maximiser la plage de coulissement dudit deuxième élément.

On précise ici que, quand il est noté que le deuxième élément supporte un coussin, il convient de prendre en compte que le coussin peut être directement associé audit deuxième élément, ou bien de façon indirecte par l'entremise d'un bloc intermédiaire monté en coulissement sur ledit deuxième élément, comme on le verra plus loin.

Dans cette description, les termes de positionnement dans l'espace (haut, longitudinal, transversal, vertical, ...) sont pris en référence à l'appui-tête en place dans le véhicule, ledit véhicule s'étendant longitudinalement selon sa longueur (X), transversalement selon sa largeur (Y) et verticalement selon sa hauteur (Z).

D'autres particularités et avantages de l'invention apparaîtront dans la description qui suit, faite en référence aux figures jointes, dans lesquelles :

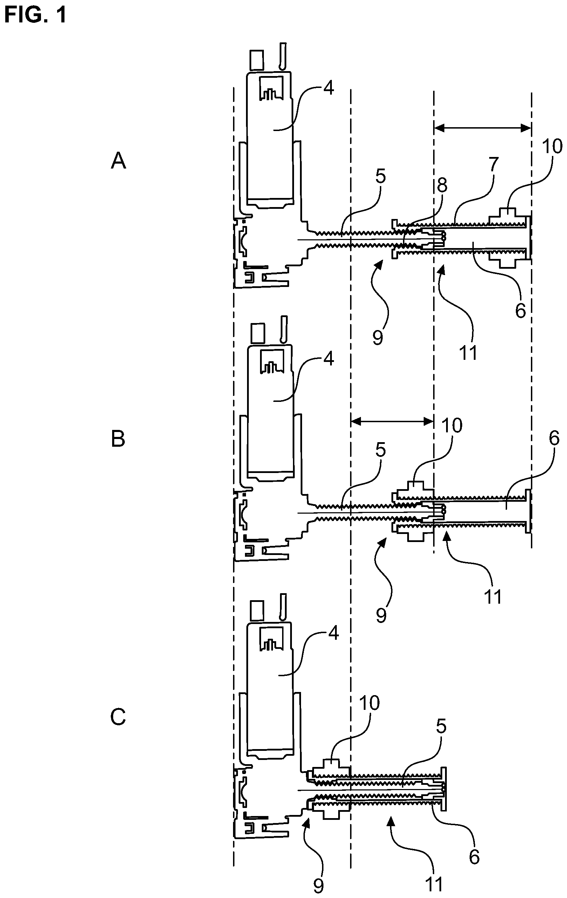

[Fig.1] est une vue schématique en coupe d'un dispositif d'actionnement motorisé, selon une réalisation, la double vis étant déployée de façon maximale (A), intermédiaire (B) et minimale (C),
[Fig.2] est une vue générale partielle d'un appui-tête selon une réalisation recevant le dispositif d'actionnement représenté en figure 1 en vue d'un réglage en hauteur du deuxième élément par rapport au premier, la double vis étant déployée de façon maximale (A), intermédiaire (B) et minimale (C),
[Fig.3] est une vue schématique en perspective partielle d'un appui-tête selon une réalisation, ledit appui-tête étant pourvu de deux dispositifs d'actionnement en vue de permettre un réglage du coussin à la fois en hauteur et selon une direction longitudinale.

En référence aux figures, on décrit un appui-tête 1 de siège de véhicule automobile, ledit appui-tête comprenant :
- un premier élément 2a,2b structurel,
- un deuxième élément 3a,3b structurel supportant un coussin, non représenté, d'appui de la tête d'un occupant dudit siège, ledit deuxième élément étant monté en coulissement par rapport audit premier élément, de manière à permettre un réglage de la position dudit coussin,
- un dispositif d'actionnement motorisé dudit deuxième élément en coulissement, ledit dispositif comprenant un motoréducteur 4 fixé à l'un desdits éléments,
ledit dispositif comprenant en outre :
- une vis interne 5 sans fin actionnée en rotation par ledit motoréducteur,
- une vis externe 6 sans fin pourvue d'un filetage externe 7, ladite vis étant tubulaire et présentant un filetage interne 8 s'étendant sur une portion de sa longueur, ladite vis externe recevant ladite vis interne en vissage dans ledit filetage interne, ledit filetage interne étant disposé en extrémité 9 de ladite vis externe la plus proche dudit motoréducteur,
- un écrou 10 recevant ledit filetage externe, ledit écrou étant fixé à l'autre desdits éléments,
de sorte que lesdits éléments soient reliés entre eux par une double vis 11 afin de maximiser la plage de coulissement dudit deuxième élément.

Pour faciliter la compréhension de la description, on précise ici que, dans les réalisations présentées plus loin, un premier élément 2a est relié - par une double vis 11 - à un deuxième élément 3a et un premier élément 2b est relié - par une double vis 11 - à un deuxième élément 3b.

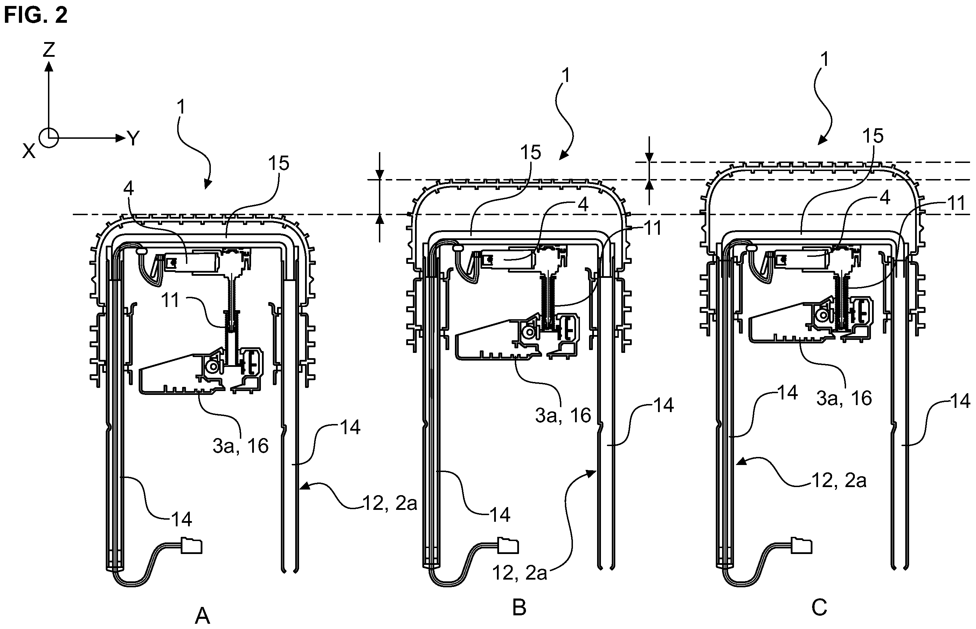

Selon la réalisation représentée en figure 2 :
- le premier élément 2a est sous forme d'une armature 12 destinée à être montée à un dossier du siège,
- le deuxième élément 3a est sous forme d'un bloc principal 16 monté en coulissement vertical sur ladite armature, le coussin étant supporté par ledit bloc.

Selon la réalisation représentée en figure 2, le motoréducteur 4 est fixé au premier élément 2a et l'écrou 10 est fixé au deuxième élément 3a.

En variante non représentée, le motoréducteur 4 est fixé au deuxième élément 3a et l'écrou 10 est fixé au premier élément 2a.

Un tel agencement s'applique en particulier à un appui-tête 1 dont le coussin est uniquement réglable en hauteur.

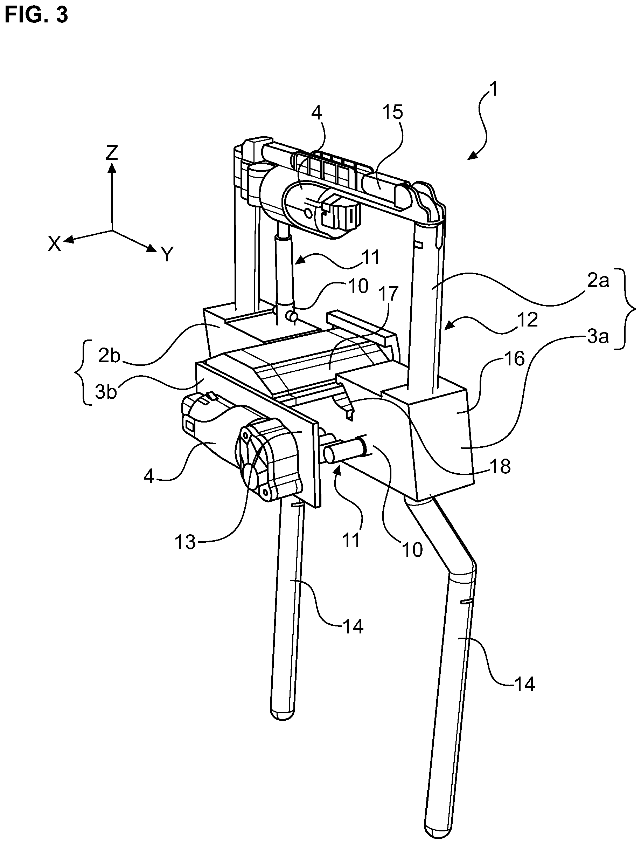

Selon la réalisation représentée en figure 3, l'appui-tête 1 comprend une armature 12 destinée à être montée à un dossier du siège, sachant que :
- un premier élément 2a est formé par ladite armature,
- un deuxième élément 3a est formé par un bloc principal 16 monté en coulissement vertical sur ladite armature,
- un bloc intermédiaire 13 est monté en coulissement longitudinal sur ledit bloc principal, le coussin étant solidaire dudit bloc intermédiaire.

Un tel agencement permet un réglage vertical du deuxième élément 3a et un réglage longitudinal du bloc intermédiaire 13, le coussin étant indirectement supporté par ledit deuxième élément, par l'entremise dudit bloc intermédiaire, le réglage dudit bloc intermédiaire se faisant au moyen d'une double vis 11 selon la réalisation représentée mais pouvant être réalisé par un autre moyen selon une variante non représentée.

Selon la réalisation représentée en figure 3, l'appui-tête 1 comprend une armature 12 destinée à être montée à un dossier du siège, sachant que :
- un premier élément 2b est formé par un bloc principal 16 monté en coulissement vertical sur ladite armature,
- un deuxième élément 3b est formé par un bloc intermédiaire 13 monté en coulissement longitudinal sur ledit bloc principal, le coussin étant solidaire dudit bloc intermédiaire.

Un tel agencement permet un réglage longitudinal du deuxième élément 3b et un réglage vertical du bloc principal 16, le coussin étant directement supporté par ledit deuxième élément, le réglage dudit bloc principal formant le premier élément 2b se faisant au moyen d'une double vis 11 selon la réalisation représentée mais pouvant être réalisé par un autre moyen selon une variante non représentée.

Selon la réalisation représentée en figure 3, les réglages vertical et longitudinal du coussin se font chacun au moyen d'une double vis 11 respective, l'appui-tête 1 comprenant une armature 12 destinée à être montée à un dossier du siège, ledit appui-tête comprenant en outre un bloc principal 16 monté en coulissement vertical sur ladite armature et un bloc intermédiaire 13 monté en coulissement longitudinal sur ledit bloc principal, le coussin étant solidaire dudit bloc intermédiaire, sachant que :
- pour le réglage vertical dudit coussin, un premier élément 2a est formé par ladite armature et un deuxième élément 3a par ledit bloc principal,
- pour le réglage longitudinal dudit coussin, un premier élément 2b est formé par ledit bloc principal et un deuxième élément 3b par ledit bloc intermédiaire.

En d'autres termes, le bloc principal 16 forme soit un deuxième élément 3a, soit un premier élément 2b selon le réglage envisagé.

Selon la réalisation représentée en figure 3 :
- le motoréducteur 4 utilisé en réglage vertical est fixé à l'armature 12, sur l'entretoise15, l'écrou 10 étant fixé au bloc principal 16,
- le motoréducteur 4 utilisé en réglage longitudinal est fixé au bloc intermédiaire 13, l'écrou 10 étant fixé audit bloc principal.

En variantes non représentées, on pourrait envisager de permuter les positions d'un motoréducteur 4 et de l'écrou 10 correspondant : par exemple, comme envisagé dans la réalisation représentée en figure 2, le motoréducteur 4 utilisé en réglage vertical pourrait être fixé au bloc principal 16, l'écrou 10 étant fixé à l'entretoise 15.

De même pour le réglage longitudinal, on pourrait envisager que le motoréducteur 4 soit fixé au bloc principal 16 et l'écrou 10 au bloc intermédiaire 13.

Selon une réalisation non représentée, dans le cas de la présence d'un bloc intermédiaire 13, ledit bloc peut être pourvu de deux ailes d'appui latéral de la tête d'un passager, lesdites ailes étant montées latéralement de part et d'autre dudit bloc et en rotation de manière à pouvoir être réglées angulairement.

Selon une réalisation non représentée, le premier élément 2a est sous forme d'une armature 12 destinée à être fixée à dossier du siège, le deuxième élément 3a étant sous forme d'un bloc monté en coulissement longitudinal par rapport à ladite armature, le coussin étant solidaire dudit bloc.

Un tel agencement s'applique en particulier à un appui-tête 1 dont le coussin est uniquement réglable selon une direction longitudinale.

Selon les réalisations illustrées en figures 2 et 3, l'armature 12 comprend deux tiges 14 métalliques parallèles - notamment tubulaires - s'étendant verticalement, lesdites tiges présentant deux extrémités supérieures reliées entre elles par une entretoise 15 transversale - notamment à base de matériau plastique moulé - fixée sur lesdites extrémités supérieures - notamment par emboîtement.

Selon une variante non représentée, l'armature 12 pourrait être à base d'un tube métallique replié pour présenter en vue longitudinale une forme générale de U renversé, de manière à présenter deux tiges 14 métalliques parallèles s'étendant verticalement, lesdites tiges étant formées par les branches du U, et une entretoise 15 transversale formée par la partie médiane du U.

Selon une réalisation, les blocs 13,16 précédemment décrits sont à base de matériau plastique moulé.

Selon la réalisation représentée en figure 3, le bloc intermédiaire 13 est monté sur le bloc principal 16 par des « queues d'aronde » mettant en oeuvre des tenons 17 prévus sur ledit bloc intermédiaire coopérant avec des mortaises 18 prévues sur ledit bloc principal.

## Revendications

1. Appui-tête (1) de siège de véhicule automobile, ledit appui-tête comprenant :
• un premier élément (2a,2b) structurel,
• un deuxième élément (3a,3b) structurel supportant un coussin d'appui de la tête d'un occupant dudit siège, ledit deuxième élément étant monté en coulissement par rapport audit premier élément, de manière à permettre un réglage de la position dudit coussin,
• un dispositif d'actionnement motorisé dudit deuxième élément en coulissement, ledit dispositif comprenant un motoréducteur (4) fixé à l'un desdits éléments,
ledit appui-tête étant **caractérisé en ce que** le dispositif comprend en outre :
• une vis interne (5) sans fin actionnée en rotation par ledit motoréducteur,
• une vis externe (6) sans fin pourvue d'un filetage externe (7), ladite vis étant tubulaire et présentant un filetage interne (8) s'étendant sur une portion de sa longueur, ladite vis externe recevant ladite vis interne en vissage dans ledit filetage interne, ledit filetage interne étant disposé en extrémité (9) de ladite vis externe la plus proche dudit motoréducteur,
• un écrou (10) recevant ledit filetage externe, ledit écrou étant fixé à l'autre desdits éléments,
de sorte que lesdits éléments soient reliés entre eux par une double vis (11) afin de maximiser la plage de coulissement dudit deuxième élément.

2. Appui-tête (1) selon la revendication 1, **caractérisé en ce que** :
• le premier élément (2a) est sous forme d'une armature (12) destinée à être montée à un dossier du siège,
• le deuxième élément (3a) est sous forme d'un bloc principal (16) monté en coulissement vertical sur ladite armature, le coussin étant supporté par ledit bloc.

3. Appui-tête (1) selon la revendication 1, ledit appui-tête comprenant une armature (12) destinée à être montée à un dossier du siège, ledit appui-tête étant **caractérisé en ce que** :
• un premier élément (2a) est formé par ladite armature,
• un deuxième élément (3a) est formé par un bloc principal (16) monté en coulissement vertical sur ladite armature,
• un bloc intermédiaire (13) est monté en coulissement longitudinal sur ledit bloc principal, le coussin étant solidaire dudit bloc intermédiaire.

4. Appui-tête (1) selon la revendication 1, ledit appui-tête comprenant une armature (12) destinée à être montée à un dossier du siège, ledit appui-tête étant **caractérisé en ce que** :
• un premier élément (2b) est formé par un bloc principal monté en coulissement vertical sur ladite armature,
• un deuxième élément (3b) est formé par un bloc intermédiaire (13) monté en coulissement longitudinal sur ledit bloc principal, le coussin étant solidaire dudit bloc intermédiaire.

5. Appui-tête (1) selon la revendication 1, ledit appui-tête comprenant une armature (12) destinée à être montée à un dossier du siège, ledit appui-tête comprenant en outre un bloc principal (16) monté en coulissement vertical sur ladite armature et un bloc intermédiaire (13) monté en coulissement longitudinal sur ledit bloc principal, le coussin étant solidaire dudit bloc intermédiaire, ledit appui-tête étant **caractérisé en ce que** :
• pour le réglage vertical dudit coussin, un premier élément (2a) est formé par ladite armature et un deuxième élément (3a) par ledit bloc principal,
• pour le réglage longitudinal dudit coussin, un premier élément (2b) est formé par ledit bloc principal et un deuxième élément (3b) par ledit bloc intermédiaire.

6. Appui-tête (1) selon l'une quelconque des revendications 3 à 5, **caractérisé en ce que** le bloc intermédiaire (13) est pourvu de deux ailes d'appui latéral de la tête d'un passager, lesdites ailes étant montées latéralement de part et d'autre dudit bloc et en rotation de manière à pouvoir être réglées angulairement.

7. Appui-tête (1) selon la revendication 1, **caractérisé en ce que** le premier élément (2a) est sous forme d'une armature (12) destinée à être fixée à dossier du siège, le deuxième élément (3a) étant sous forme d'un bloc monté en coulissement longitudinal par rapport à ladite armature, le coussin étant solidaire dudit bloc.
